# EUROPEAN PATENT APPLICATION

(11) **EP 4 538 871 A1**
(43) Date of publication of application: **16.04.2025**
(21) Application number: 23830463.8
(22) Date of filing: 29.06.2023
(51) Int. Cl.: G06F 8/70, G06F 8/65, G06F 8/71, G06F 9/445

(54) **APPLICATION MANAGEMENT METHOD, APPLICATION SUBSCRIPTION METHOD, AND RELATED DEVICE**

(30) Priority: 30.06.2022 CN 202210760487
(71) Applicant: Beijing Wellintech Co., Ltd., Beijing 100086 (CN)
(72) Inventor: LIN, Wei, Beijing 100086 (CN)
(74) Representative: Cabinet Camus Lebkiri
(86) International application number: PCT/CN2023/104193
(87) International publication number: WO 2024/002299

(57) **Abstract**

The present application relates to the technical field of software, and relates to an application management method, an application subscription method, and a related device. In the present application, a first application can establish an association relationship with a second application; and the first application controls deployment of the first application and of the second application by means of an application control module. Thus, the first application does not need to directly control the running state of the second application. That is, the running states of the first application and of the second application are not associated with each other. Therefore, decoupling of the first application and the second application can be achieved.

## Description

This application claims a priority to Chinese Patent Application No. 202210760487.8, filed on June 30, 2022, which is incorporated in this application by reference in its entirety.

### TECHNICAL FIELD

The present disclosure relates to the field of software technologies, and in particular to, an application management method, an application subscription method and a related device.

### BACKGROUND

An application program (application, APP), also referred to as an application, refers to a computer program for completing a certain or more specific works, which may run in a user mode and interact with a user, and may have a visual user interface.

With more and more functions of APPs, functions between APPs will be interdependent with each other. When a plurality of APPs interdependent with each other are redeveloped, if one APP of the APPs needs to be modified, an APP that is interdependent with the APP also needs to be modified, thereby resulting in lower development efficiency for the APP. Therefore, when the APP is redeveloped, it is necessary to first decouple the APPs interdependent with each other.

### SUMMARY

The present disclosure provides an application management method, an application subscription method and a related device, which can decouple a plurality of APPs interdependent with each other.

Technical solutions of the present disclosure are as follows.

In a first aspect, the present disclosure provides an application management method, and the method is applied to a first application and in a device in which the first application is located. The method includes: establishing, by the first application, an association relationship with a second application; and controlling, by the first application by means of an application control module, a deployment of the first application and a deployment of the second application.

In some implementations, the association relationship between the first application and the second application is a parent-child relationship, and the first application is a parent application of the second application.

In some implementations, the above "controlling, by the first application by means of the application control module, the running state of the second application", may specifically include: by the first application, a first control instruction to the application control module, so that the application control module controls start or stop running of the second application according to the first control instruction.

Optionally, the method further includes: receiving, by the first application, first configuration information from the application control module, wherein the first configuration information is used to start the first application; and sending, by the first application, second configuration information to the second application, wherein the second configuration information is used to start the second application.

Optionally, configuration information of the second application includes to-be-processed data and a processed result.

Optionally, the method further includes: uploading, by the first application, to-be-processed data to a data storage module, so that the second application acquires the to-be-processed data from the data processing module.

Optionally, the method further includes: acquiring, by the first application, a processed result from the data processing module, wherein the processing module is obtained by processing the to-be-processed module and is uploaded to the data storage module, by the second application.

Optionally, the above "acquiring, by the first application, the processed result from the data storage module", may specifically include: acquiring a data storage structure of the data storage module, and acquiring the processed result from the data storage module according to the data storage structure, by the first application, wherein the data storage structure refers to a storage form used by the data storage module when storing data; and that the second application acquires the to-be-processed data from the data storage module, refers to that the second application acquires the to-be-processed data from the data storage module according to the data storage structure.

Optionally, data that is stored in the data storage module includes multiple pieces of sub-data, each piece of sub-data has a corresponding identifier, and the data that is stored includes the to-be-processed data and the processed result.

Optionally, the above "acquiring, by the first application, the processed result from the data storage module", may specifically include: sending, by the first application, first request information to the data storage module, wherein the first request information includes one or more first fields, and a first field corresponds to a piece of sub-data; and receiving, by the first application, first response information from the data storage module, wherein the first response information includes a piece of sub-data corresponding to each first field of the one or more first fields.

Optionally, when the processed result does not include a piece of sub-data corresponding to a first field, the first response information includes a preset parameter corresponding to the piece of sub-data.

In a second aspect, the present disclosure provides an application management apparatus, and the apparatus is applied to a first application or a device on which the first application is installed. The apparatus may be used by the first application to implement the application management method as described in the first aspect and in any possible implementation of the first aspect. Functions of the apparatus may be implemented by hardware, or may also be implemented by executing corresponding software by the hardware. The hardware or software includes one or more modules or modules corresponding to the steps in the application management method described in the first aspect and in any possible implementation of the first aspect.

For example, the apparatus includes: an establishing module, configured to establish an association relationship with a second application; and a control module, configured to a running state of the second application by means of an application control module, where the application control module is configured to control a deployment of the first application and a deployment of the second application.

Optionally, the association relationship between the first application and the second application is a parent-child relationship, and the first application is a parent application of the second application.

In some implementations, the control module a first control instruction to the application control module, so that the application control module controls start or stop running of the second application according to the first control instruction.

In some implementations, the apparatus further includes: a receiving module, configured to receive first configuration information from the application control module, and the first configuration information is used to start the first application; and a sending module, configured to send second configuration information to the second application, where the second configuration information is used to start the second application.

Optionally, configuration information of the second application includes to-be-processed data and a processed result.

In some implementations, the sending module is further configured to upload to-be-processed data to a data storage module, so that the second application acquires the to-be-processed data from the data processing module.

In some implementations, the apparatus further includes an acquiring module, the acquiring module is configured to: acquire a processed result from the data processing module, wherein the processed module is obtained by processing the to-be-processed module and is uploaded to the data storage module, by the second application.

In some implementations, the acquiring module is specifically configured to: acquire a data storage structure of the data storage module, and acquire the processed result from the data storage module according to the data storage structure, where the data storage structure refers to a storage form used by the data storage module when storing data; and acquire a data storage structure of the data storage module, and acquire the processed result from the data storage module according to the data storage structure, by the first application, where the data storage structure refers to a storage form used by the data storage module when storing data.

Optionally, data that is stored in the data storage module includes multiple pieces of sub-data, each piece of sub-data has a corresponding identifier, and the data that is stored includes the to-be-processed data and the processed result.

In some implementations, the acquiring module is specifically configured to: send first request information to the data storage module, where the first request information includes one or more first fields, and a first field corresponds to a piece of sub-data; and receive first response information from the data storage module, where the first response information includes a piece of sub-data corresponding to each first field of the one or more first fields.

Optionally, when the processed result does not include a piece of sub-data corresponding to a first field, the first response information includes a preset parameter corresponding to the piece of sub-data.

In a third aspect, the present disclosure provides an electronic device, for example, the electronic device may be installed with the first application described in the above first aspect. The electronic device includes: a processor, and a memory for storing instructions executable by the processor. The processor is configured to, when executing the instructions, cause the electronic device to implement the method as described in the first aspect and in any possible implementation of the first aspect.

In a fourth aspect, the present disclosure provides a computer-readable storage medium on which computer program instructions are stored. The computer program instructions, when executed by an electronic device, cause the electronic device to implement the method as described in the first aspect and in any possible implementation of the first aspect.

In a fifth aspect, the present disclosure provides a computer program product including computer-readable codes or a non-volatile computer-readable storage medium carrying computer-readable codes. The computer-readable codes are executed in an electronic device, a processor in the electronic device implements the method as described in the first aspect and in any possible implementation of the first aspect.

In a sixth aspect, the present disclosure provides an application subscription method applied to an application control module, where the application control module is configured to control a deployment of a first application and a deployment of a second application, there is an association relationship between the first application and the second application, and the first application is capable of controlling a running state of the second application by means of the application control module; and the method includes: receiving subscription information, where the subscription information is used to subscribe to application updating information; and sending first notification information when the first application and/or the second application is determined to be updated, where the first notification information is used to indicate presence of application updating.

Optionally, the first notification information includes updating information on an attribute of the first application and/or updating information on an attribute of the second application.

Optionally, the first notification information is further used to indicate presence of a new application.

In some implementations, the method further includes: receiving first query information, where the first query information is used to query information of attribute(s) of the first application, the first query information includes one or more second fields, and a second field corresponds to an attribute in the information of the attribute(s) of the first application; and sending a first query result, where the first query result includes attribute(s) corresponding to the one or more second fields.

Optionally, the first query information is further used to query whether a preset event occurs in the first application and/or attribute updating information of the first application; when the preset event occurs in the first application, the first query result further includes an identifier of the preset event; and when an attribute of the first application is changed, the first query result further includes a value of the attribute that is changed.

In some implementations, the method further includes: receiving second query information, where the second query information is used to query attribute information of the second application, and the second query information includes an identifier of the second application; and sending a second query result, where the second query result includes the attribute information of the second application, and the attribute information includes a running state of the second application.

In a seventh aspect, the present disclosure provides an application manage apparatus, and the apparatus is applied to a control module, the application control module is configured to control a deployment of a first application and a deployment of a second application, there is an association relationship between the first application and the second application, and the first application is capable of controlling a running state of the second application by means of the application control module. The apparatus may be used to implement the application subscription method as described in the sixth aspect and in any possible implementation of the sixth aspect. Functions of the apparatus may be implemented by hardware, or may also be implemented by executing corresponding software by the hardware. The hardware or software includes one or more modules or modules corresponding to the steps in the application management method described in the sixth aspect and any possible implementation of the sixth aspect.

For example, the apparatus includes: a receiving module, configured to subscription information, where the subscription information is used to subscribe to application updating information; and a sending module, configured to send first notification information when the first application and/or the second application is determined to be updated, where the first notification information is used to indicate presence of application updating.

Optionally, the first notification information includes updating information on an attribute of the first application and/or updating information on an attribute of the second application.

Optionally, the first notification information is further used to indicate presence of a new application.

In some implementations, the receiving module is further configured to first query information, where the first query information is used to query information of attribute(s) of the first application, the first query information includes one or more second fields, and a second field corresponds to an attribute in the information of the attribute(s) of the first application; and the sending module is further configured to send a first query result, where the first query result includes attribute(s) corresponding to the one or more second fields.

Optionally, the first query information is further used to query whether a preset event occurs in the first application and/or attribute updating information of the first application; when the preset event occurs in the first application, the first query result further includes an identifier of the preset event; and when an attribute of the first application is changed, the first query result further includes a value of the attribute that is changed.

In some implementations, the receiving module is further configured to receive second query information, where the second query information is used to query attribute information of the second application, and the second query information includes an identifier of the second application; and the sending module is further configured to send a second query result, where the second query result includes the attribute information of the second application, and the attribute information includes a running state of the second application.

In an eighth aspect, the present disclosure provides an electronic device including: a processor, and a memory for storing instructions executable by the processor. The processor is configured to, when executing the instructions, cause the electronic device to implement the method as described in the sixth aspect and in any possible implementation of the sixth aspect.

In a ninth aspect, the present disclosure provides a computer-readable storage medium on which computer program instructions are stored. The computer program instructions, when executed by an electronic device, cause the electronic device to implement the method as described in the sixth aspect and in any possible implementation of the sixth aspect.

In a tenth aspect, the present disclosure provides a computer program product including computer-readable codes or a non-volatile computer-readable storage medium carrying computer-readable codes. The computer-readable codes are executed in an electronic device, a processor in the electronic device implements the method as described in the sixth aspect and in any possible implementation of the sixth aspect.

Based on any aspect of the above first aspect to the above tenth aspect, the present disclosure has at least beneficial effects as follows.

In the present disclosure, for a first application and a second application that have an association relationship, the first application may control a running state of the second application by means of an application control module. In this way, the first application does not need to directly control the running state of the second application. That is, the first application is not associated with the running state of the first application. Therefore, decoupling of the first application from the second application may be achieved.

It should be understood that the general description above and the detailed description hereafter are only exemplary and explanatory, and cannot limit the present disclosure.

### BRIEF DESCRIPTION OF THE DRAWINGS

The drawings here are incorporated into the specification and constitute a part of the specification, illustrate embodiments that conform to the present disclosure, are used together with the specification to explain principles of the present disclosure, and do not constitute improper limitations on the present disclosure.
FIG. 1 is a schematic flow diagram of an application management method provided in the embodiments of the present disclosure.
FIG. 2 is a schematic diagram of an association relationship between configuration information of a first application and configuration information of a second application provided in the embodiments of the present disclosure.
FIG. 3 is a schematic diagram of a model and a predefined relationship provided in the embodiments of the present disclosure.
FIG. 4 is a schematic diagram of an association relationship between a running object of a first application and a running object of a second application provided in the embodiments of the present disclosure.
FIG. 5 is a schematic flow diagram of an application management method provided in the embodiments of the present disclosure.
FIG. 6 is another schematic flow diagram of an application management method provided in the embodiments of the present disclosure.
FIG. 7 is another schematic flow diagram of an application management method provided in the embodiments of the present disclosure.
FIG. 8 is a schematic diagram of a data storage structure provided in the embodiments of the present disclosure.
FIG. 9 is another schematic flow diagram of an application management method provided in the embodiments of the present disclosure.
FIG. 10 is a schematic flow diagram of an application subscription method provided in the embodiments of the present disclosure.
FIG. 11 is another schematic flow diagram of an application subscription method provided in the embodiments of the present disclosure.
FIG. 12 is a structural schematic diagram of an application management apparatus provided in the embodiments of the present disclosure.
FIG. 13 is a structural schematic diagram of an application subscription apparatus provided in the embodiments of the present disclosure.

### DETAILED DESCRIPTION

In order to make those ordinary in the art to better understand the technical solutions of the present disclosure, the technical solutions in the embodiments of the present disclosure will be described below clearly and completely in conjunction with the drawings.

It should be noted that the terms "first", "second", etc., in the specification and claims as well as the above drawings of the present disclosure are used to distinguish similar objects, but are not necessarily used to describe a specific order or sequence. It should be understood that the data used in this way may be interchanged in appropriate cases, so that the embodiments described herein may be implemented in an order other than those illustrated or described herein. The implementations described in the following exemplary embodiments do not represent all implementations consistent with the present disclosure. On the contrary, they are only examples of apparatuses and methods consistent with some aspects of the present disclosure that are detailed in the accompanying claims.

It should also be understood that the term "comprise/include" and variations thereof indicates the presence of described features, integers, steps, operations, elements and/or components, but does not exclude the presence or addition of one or more other features, integers, steps, operations, elements and/or components.

"And/or" is used to describe an association relationship between associated objects, and represents that there may be three types of relationships. For example, "A and/or B" may represent three cases: only A, both A and B, or only B. The character "/" generally represents that it is the "or" relationship between associated objects before and after "/".

An application program (application, APP), also referred to as an application, refers to a computer program for completing a certain or more specific works, which may run in a user mode and interact with a user, and may have a visual user interface.

Generally, a plurality of coupling points as follows are included between APPs mainly.
1. Static structural coupling between APPs. That is, an APP directly depends on an external interface or data structure of another APP. When the interface or structure data of the depended APP is changed, depending on the need of re-upgrade and compiling, its codes and program structures also need to be modified.
2. Functional coupling between APPs. An APP uses a function of another APP.
3. Coupling of an APP with a used data object. When an APP accesses a data object, the APP will depend on a data structure of the data object. If the data structure of the data object is changed, functional logic codes of the APP need to be modified. The data object may include data for describing an attribute of an application.
4. APP deployment coupling. When deploying a depended APP, an APP needs to consider a program structure of the depended APP and perform a targeted deployment according to the structure and type of the depended APP.

For example, it is taken as an example that the application may include a monolithic application and a multi-process application. The monolithic application may refer to that an application may have multiple modules. The multiple modules may complete a function of the application by coordination of derivation members, methods or interfaces of the modules. That is, there is coupling and structural dependency between the multiple modules of the application. The multi-process application may refer to that multiple applications call with each other to implement a certain function. For example, the multi-process application may include a first application and a second application. The first application may call the second application to implement a function of the second application. That is, there is coupling and functional dependency between the multiple applications.

Currently, in order to achieve decoupling of applications, a manner 1 and a manner 2 as follows may be adopted. The manner 1 is used to decouple the monolithic application, and the manner 2 is used to decouple the multi-process program.

Manner 1: for a monolithic application, a module that is depended on by other modules needs to be front-located, and then members, methods, and interfaces of the module. Meanwhile, members, methods and interfaces of other modules are also modified.

Manner 2: for a multi-process application, a service-oriented architecture (SOA) architecture or a micro-service architecture may be adopted to decouple the application. Different languages and development tools are used by the SOA architecture or the micro-service architecture to provide a parallel development service for multiple applications.

Herein, the SOA architecture focuses on the maximization of the re-usability of the application, and performs the communication decoupling by an enterprise data bus. By following the same communication protocol between services, interactions between services may be implemented, thereby achieving the structural decoupling of the applications. The micro-service architecture performs communication by a lightweight communication protocol, such as hypertext transfer protocol (HTTP), representational state transfer (REST), or thrift application programming interface (API).

The SOA architecture and the micro-service architecture implement interaction based on the communication protocol, and thus the design of a complete communication protocol and the development of a message system (e.g., the enterprise data bus of SOA) are required. Developers all need to understand the communication protocol. Once the communication protocol is changed, the system using the communication protocol needs to be modified as well, which provides development costs and is inefficient. Moreover, the SOA architecture and the micro-service architecture may decouple the structures between the APPs, but there are still functional dependencies between the APPs.

Based on this, the embodiments of the present disclosure provide an application management method, and the method may decouple the functional dependency relationship between the APPs, to achieve the parallel development between multiple APPs, and separate deployment and running of the APPs.

Exemplarily, the method may be specifically implemented on a hardware device corresponding to the application, for example, the hardware device may include a server, a computer, an electronic device, etc. The server may be a separate server, or a server cluster composed of multiple servers. In a part of the implementations, the server cluster may also be a distributed cluster. The specific implementations of the hardware device corresponding to the application are not limited to the present disclosure. It should be noted that the implementation steps at the application side involved in the embodiments of the present disclosure may all be implemented by the hardware device corresponding to the application.

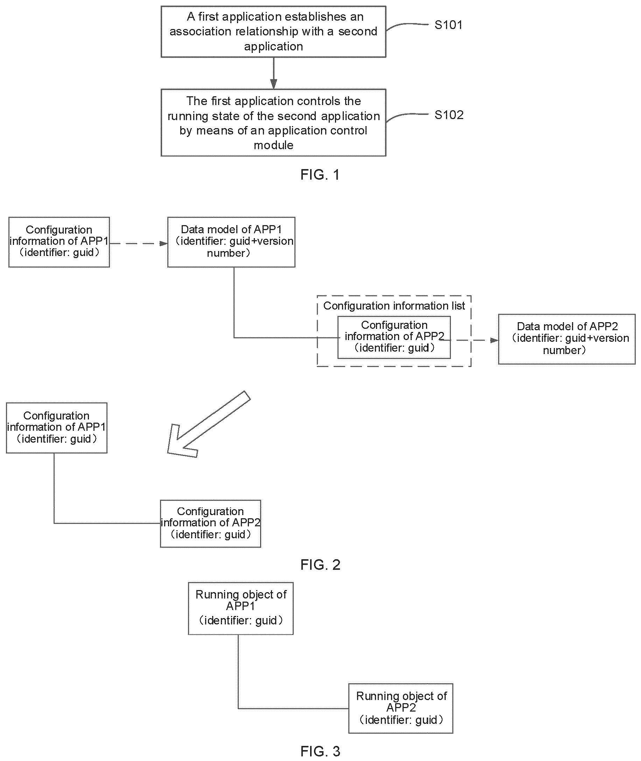

FIG. 1 is a schematic flow diagram of an application management method provided in the embodiments of the present disclosure. As shown in FIG. 1, the application management method may include the following contents.

In S101, a first application establishes an association relationship with a second application.

Herein, the association relationship between the first application and the second application may include a parent-child relationship. The first application is a parent application of the second application. The association relationship between the first application and the second application may include an association relationship between configuration information of the first application and configuration information of the second application, and an association relationship between a running object of the first application and a running object of the second application.

Configuration information of the application may refer to an attribute value of a data model of the application. For example, the configuration information of the application may include one or more of identifier information of the application (e.g., a globally unique identifier (GUID)) or a version number of the application. The configuration information of the application may further include attribute(s) of the application. For example, the attribute(s) of the application may include one or more of a name of the application, identifier information of the configuration information of the application, identifier information and a version number of the data model of the application, or a configuration parameter value in the configuration information of the application. The data model of the application may include program code(s) of the application. The program code(s) of the application may be used to implement function(s) of the application.

The running object of the application may refer to an entity that loads and runs the configuration information of the application.

In a possible implementation, the first application may write the configuration information of the second application or the identifier information of the configuration information of the second application into a configuration information list of the first application, to obtain the association relationship between the configuration information of the first application and the configuration information of the second application.

In this way, when the first application calls the configuration information of the first application, the configuration information of the second application may be called according to the configuration information of the second application or the identifier information of the configuration information of the second application in the configuration information list. That is, the first application may establish the association relationship between the configuration information of the first application and the configuration information of the second application.

In an example, as shown in FIG. 2, it is a schematic diagram of an association relationship between the configuration information of the first application (APP1) and the configuration information of the second application (APP2) provided in the embodiments of the present disclosure. In FIG. 2, the data model of the first application is generated according to the configuration information of the first application, and the configuration information of the second application in the configuration information list of the first application may generate the data model of the second application.

In another possible implementation, the first application may, in response to a development operation, use a program code of the second application as a running script or a functional function of a program code of the first application. In this way, when the program code of the first application runs, the program code of the second application may be called, to obtain a running object of the first application and a running object of the second application that have the association relationship.

In an example, as shown in FIG. 3, it is an association relationship between the running object of the first application and the running object of the second application provided in the embodiments of the present disclosure.

In another possible implementation, when developing the first application, the developer of the first application may add identifier information of the second application into the first application, or add some fields that can indicate the second application. In this way, an association relationship between the first application and the second application may be established.

In S102, the first application controls a running state of the second application by means of the application control module.

Herein, the application control module may also be referred to as an application operation and maintenance system, or may also be a device in an application operation and maintenance system. The application control module is configured to control a deployment of the first application and a deployment of the second application. The application control module may further store deployment configuration information of the application (e.g., a deployment node, a running resource of the application, etc.), and is configured to provide functions such as deployment control, debugging, and monitoring of running, of the application.

In a possible implementation, the first application may send a first control instruction to the application control module. Correspondingly, the application control module may control start or stop running of the second application according to the first control instruction.

The first control instruction may be used to control the start or stop running of the second application. For example, the first control instruction may include a first indicator, and the first indicator may be used to indicate to start the second application or stop running the second application. The first indicator may be a number, a character, or a combination of a number and a character. For example, when the first indicator is a first character, the first indicator is used to indicate to start the second application; and when the first indicator is a second character, the first indicator is used to indicate to stop running the second application. The first indicator is different from the second indicator. For example, the first indicator may be "start-APP2", and the second indicator may be "stop-APP2".

In another possible implementation, the first application may control the start of the second application by means of the application control module, in deployment and running.

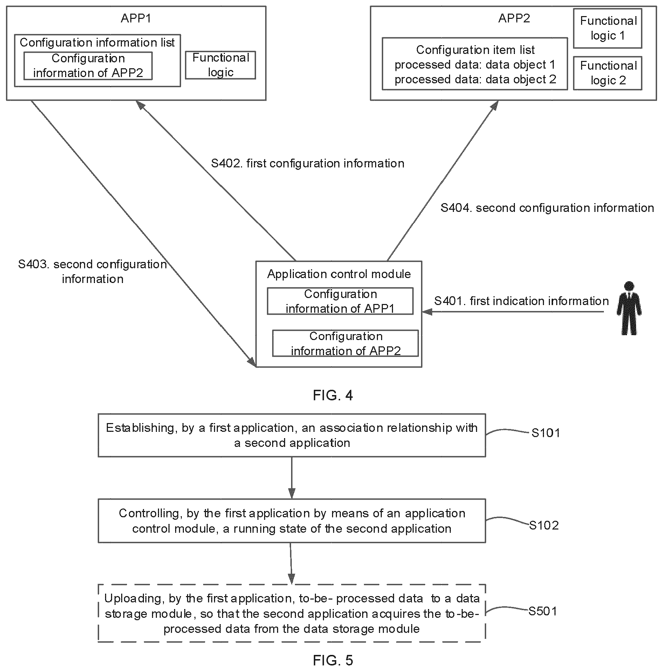

In an example, as shown in FIG. 4, this possible implementation may include S401 to S404 as follows.

In S401, the application control module receives first indication information.

Herein, the first indication information is used to indicate to deploy the first application. For example, the first indication information may include the configuration information of the first application.

In S402, the application control module sends first configuration information to the first application. Correspondingly, the first application receives the first configuration information from the application control module.

Herein, the first configuration information may be used to start the first application. For example, the first configuration information may include the configuration information of the first application.

In S403, the first application sends second configuration information to the application control module. Correspondingly, the application control module receives the second configuration information from the first application.

Herein, the second configuration information may be used to start the second application. For example, the second configuration information may include the configuration information of the second application. The second configuration information may further be used to indicate to-be-processed data and a processed result.

In an example, the second configuration information may further include to-be-processed data. In this way, after receiving the second configuration information, the second application may process the to-be-processed data to obtain a corresponding processed result. For example, as shown in FIG. 4, the second application may also have a configuration item list, and the configuration item list is used to store the to-be-processed data and the corresponding processed result. For example, in FIG. 4, the data object 1 may refer to the to-be-processed data, and the data object 2 may refer to the corresponding processed result.

Furthermore, after receiving the configuration information of the application, the application control module in FIG. 4, may also be configured to store the configuration information of the application. For example, the application control module may be configured to store the configuration information of the first application and the configuration information of the second application.

In S404, the application control module sends the second configuration information to the second application. Correspondingly, the second application receives the second configuration information from the application control module.

Based on the above S401 to S404 and based on the application control module, when the first application is deployed and started, in order to enable the second application related to the first application to be deployed and started, the first application may send a deployment and starting instruction to the application control module, and then the application control module may forward the instruction to the second application, so that the second application is deployed and started. Since there is no direct relationship between the deployment of the first application and the deployment of the second application, decoupling of the deployment between the first application and the second application is achieved.

Based on the technical solutions of the above embodiments, for the first application and the second application that have the association relationship, the first application may control the running state of the second application by means of the application control module. In this way, the first application does not need to directly control the running state of the second application. That is, the first application is not associated with the running state of the second application. Therefore, the decoupling between the first application and the second application can be achieved.

In a possible embodiment, in order to achieve data decoupling between the applications, as shown in FIG. 5, the method in the embodiments of the present disclosure may further include S501.

In S501, the first application uploads the to-be-processed data to a data storage module, so that the second application acquires the to-be-processed data from the data storage module.

The to-be-processed data may refer to data that needs to be processed when the first application calls the second application to implement the function of the second application. That is, the function of the second application may include processing data.

Herein, the data storage module may be referred to as a data storage system, or may also be a device in a data storage system. The data storage system may be used to store and manage data. For example, the data storage system may be used to provide functions such as addition, deletion, querying, and modification of data objects.

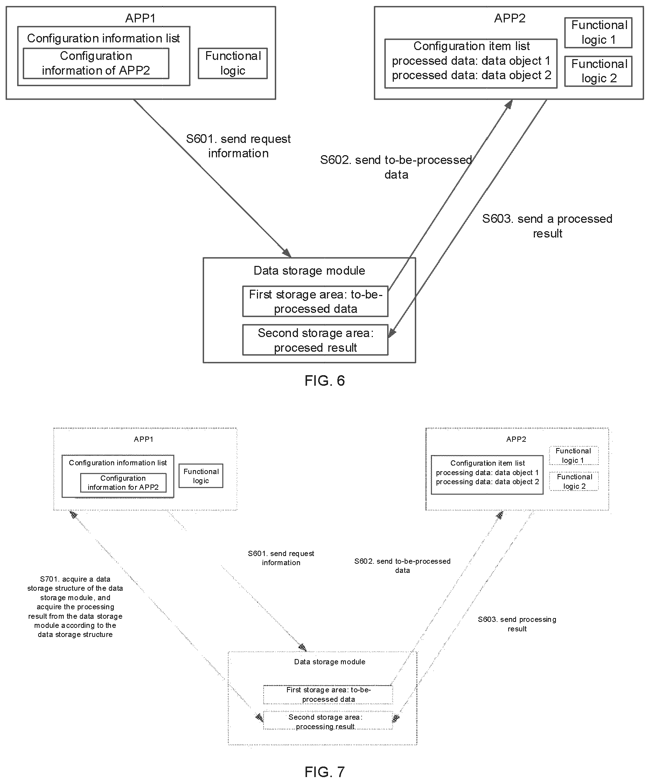

In a possible implementation, as shown in FIG. 6, the data storage module may include a first storage area and a second storage area. The first storage area is used to store the to-be-processed data. S501 may specifically include S601 to S603.

In S601, the data storage module receives request information from the first application.

The request information may be used to request the to-be-processed data. For example, the request information may include an identifier (e.g., a name) of the to-be-processed data.

In S602, the data storage module acquires the to-be-processed data from the first storage area, and sends the to-be-processed data to the second application. Correspondingly, the second application receives the to-be-processed data from the data storage module.

Herein, the data storage module may perform searching in the first storage area according to the identifier of the to-be-processed data, to acquire the to-be-processed data, and send the to-be-processed data to the second application. After receiving the to-be-processed data, the second application may process the to-be-processed data, to obtain a corresponding processed result.

In S603, the data storage module receives a processed result of the to-be-processed data from the second application, and stores the processed result in the second storage area.

Furthermore, when the second storage area of the data storage module has stored the processed result of the data, the first application may acquire the stored processed result from the second storage area. For example, the first application may send request information for acquiring the processed result of the to-be-processed data, to the data storage module. After receiving the request information, the data storage module may send the processed result of the to-be-processed data to the first application.

Based on the above embodiments, the first application and the second application may perform data interaction by means of the data storage module, and there is no direct data interaction between the first application and the second application. Since the functional coupling between the first application and the second application is mainly based on the data coupling, when the data of the first application is decoupled from the data of the second application, the first application is also decoupled functionally from the second application.

In a possible embodiment, as shown in FIG. 7, the first application acquiring the processed result from the data storage module may include S701.

In S701, the first application acquires a data storage structure of the data storage module, and acquires the processed result from the data storage module according to the data storage structure.

Herein, the data storage structure refers to a storage form used by the data storage module when storing data. For example, the storage form may be distributed. The "distributed" may refer to that the data storage module may divide the data into multiple pieces of sub-data. The multiple pieces of sub-data have respective corresponding identifiers.

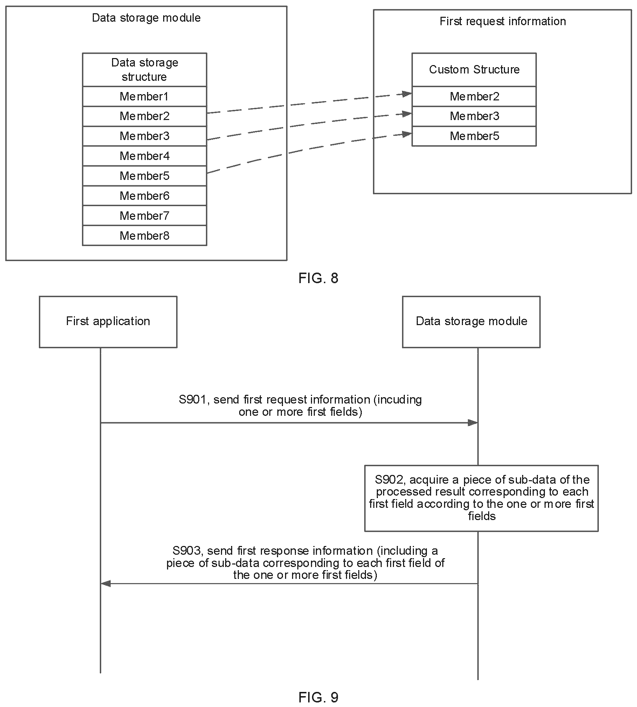

In an example, the data storage structure may be as shown in FIG. 8. In FIG. 8, a storage area of the data storage structure may include a plurality of members, such as a member 1 to a member 8. A member is used to represent a sub-storage area, and may be used to store a piece of sub-data. The storage area may be the first storage area or the second storage area.

For example, the data storage module may divide the to-be-processed data into multiple pieces of sub-data, and store the multiple pieces of sub-data into a plurality of members of the first storage area respectively.

For another example, the data storage module may divide the processed result into multiple pieces of sub-data, and store the multiple pieces of sub-data into a plurality of members of the second storage area respectively.

In a possible implementation, as shown in FIG. 9, the method for the first application to acquire the processed result from the data storage module may include S901 to S903.

In S901, the first application sends first request information to the data storage module. Correspondingly, the data storage module receives the first request information from the first application.

Herein, the first request information may include one or more first fields, and a first field corresponds to a piece of sub-data of the processed result. For example, a first field may be an identifier of a piece of sub-data of the processed result.

In S902, the data storage module acquires a piece of sub-data of the processed result corresponding to each first field according to the one or more first fields.

In S903, the data storage module sends first response information to the first application. Correspondingly, the first application receives the first response information from the data storage module.

The first response information may include a piece of sub-data corresponding to each first field of the one or more first fields.

Furthermore, when one or more pieces of sub-data of the processed result do not include a piece of sub-data corresponding to a certain first field in the first request information, in the first response message, the data corresponding to this first field may be a preset parameter. For example, the data may be "null" or a default value. The default value may be set as required, which is not limited.

Based on the above embodiments, when the first application needs to access the processed result of the second application for the to-be-processed data, stored in the data storage module, the identifier of the needed processed result may be sent to the data storage module. In this way, the data storage module may return the corresponding sub-data to the first application according to the identifier of the sub-data of the processed result. In this way, the coupling of the data structure between the first application and the second application may be achieved.

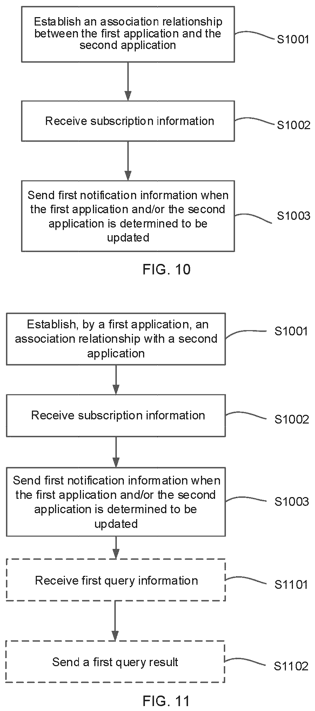

In a possible embodiment, in order to facilitate support for user's access and query of the application, as shown in FIG. 10, the embodiments of the present disclosure further provide an application subscription method, and the method may be applied to the application control module. The method may include S1001, S1002, and S1003.

In S1001, establishing an association relationship between a first application and a second application.

Herein, S1001 may be described with reference to S101 above, and will not be repeated.

In S1002, receiving subscription information.

Herein, the subscription information may be used to subscribe to application updating information. The application updating information may refer to updating information of attribute(s) of the application. For example, the application updating information may include information of addition, deletion, and modification, etc., of the attribute(s) of the application.

In S1003, when the first application and/or the second application is determined to be updated, sending first notification information.

Herein, the first notification information may be used to indicate presence of application updating. For example, the first notification information may include information of the first application after being updated and/or information of the second application after being updated. For another example, the first notification information may include a first identifier. The first identifier may be used to indicate the presence of application updating. The first identifier may be a number, a character, or a combination of a number and a character, etc., which is not limited.

In a possible implementation, when the application control module has detected that attribute(s) of the first application or attribute(s) of the second application is changed, the application control module may send the first notification information to an electronic device used by a subscribing user, so that the subscribing user may know the updating information of the application timely.

Furthermore, in some scenarios, when the application control module newly adds an application that may be controlled and deployed, the first notification information may also be used to indicate presence of a new application. For example, the first notification information may include an identifier (e.g., a name, a function, etc.) of the new application. For another example, the first notification information may include a third identifier. The third identifier may be used to indicate the presence of a new application.

Based on the techniques shown in the above FIG. 10, in order to facilitate a user to view the application updating information in the application control module, the application control module may support a user subscription requirement. In this way, when the application updating is detected, the application control module may send a notification for indicating the presence of the application updating to the subscribing user, thereby ensuring that the subscribing user can know the application updating information as soon as possible.

In a possible embodiment, as shown in FIG. 11, the method may further include S1101 and S1102.

In S1101, receiving first query information.

Herein, the first query information may be used to query information of attribute(s) of the first application. The first query information may include one or more second fields. A second field corresponds to an attribute of the first application.

Herein, the first query information may also be used to query whether a preset event occurs in the first application and/or attribute updating information of the first application. The preset event may include an adding event, a modifying event, a deleting event, etc.

In S1102, sending a first query result.

Herein, the first query result includes attribute(s) corresponding to the one or more second fields. For example, the first query result may be in the form of key-values. A key may identify a second field, and the value is an attribute.

In a possible implementation, when the preset event occurs in the first application, a data control module may send an identifier of the preset event to the electronic device used by the subscribing user; and when the attribute of the first application is changed, the data control module may send a changed attribute value of the first application to the electronic device used by the subscribing user.

Furthermore, the method may further include: receiving second query information, where the second query information may be used to query attribute information of the second application, and the second query information may include an identifier of the second application; and sending a second query result, where the second query result may include the attribute information of the second application. The attribute information of the second application may include a running state of the second application.

Based on the technical solution described in FIG. 11, when a user wants to view some attributes or data of the application, a field for the required attributes or data of the application may be sent to the application control module. In this way, the application control module only needs to return the corresponding attributes or data according to the field, without returning the entire data object to the user, thereby achieving the decoupling of the data structure.

It can be understood that, in actual implementations, the first application, the application control module, etc., described in the embodiments of the present disclosure may include one or more hardware structures and/or software modules for implementing the aforementioned corresponding application management method, and these hardware structures and/or software modules for execution may constitute an electronic device. It shall be easily recognized by those skilled in the art that, the algorithm steps of various examples described in conjunction with the embodiments in the present disclosure, the present disclosure can be implemented in the form of hardware or a combination of hardware and computer software. Whether a certain function is performed by hardware or by computer software driving hardware, depends on a specific application and a design constraint of the technical solutions. Professional technicians may use different methods to achieve the described functions, for each specific application, but such implementation should not be considered beyond the scope of the present disclosure.

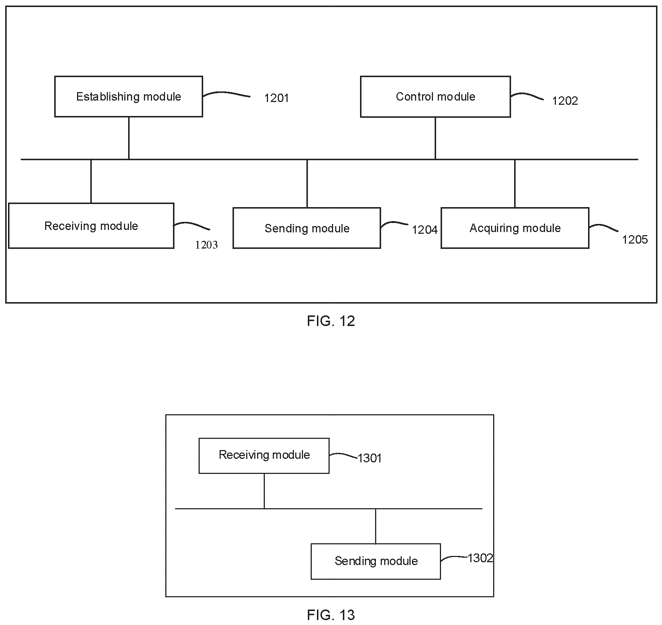

Based on such understanding, taking hardware structures and/or software modules contained in a device in which the first application is located as an example, the embodiments of the present disclosure further provide an application management apparatus correspondingly, and the application management apparatus may be applied to the above first application (e.g., a device corresponding to an application store). FIG. 12 is a structural schematic diagram of an application management apparatus provided in the embodiments of the present disclosure. As shown in FIG. 12, the application management apparatus may include: an establishing module 1201, configured to establish an association relationship with a second application; and a control module 1202, configured to control a running state of the second application by means of an application control module, where the application control module is configured to control a deployment of the first application and a deployment of the second application.

Optionally, the running state of the second application is controlled by the application control module, and the application control module is configured to control the deployment of the first application and the deployment of the second application.

In some implementations, the control module 1202 a first control instruction to the application control module, so that the application control module controls start or stop running of the second application according to the first control instruction.

In some implementations, as shown in FIG. 12, the apparatus further includes: a receiving module 1203, configured to receive first configuration information from the application control module, and the first configuration information is used to start the first application; and a sending module 1204, configured to send second configuration information to the second application, where the second configuration information is used to start the second application.

Optionally, configuration information of the second application includes to-be-processed data and a processed result.

In some implementations, the sending module 1204 is configured to upload to-be-processed data to a data storage module, so that the second application acquires the to-be-processed data from the data processing module.

In some implementations, as shown in FIG. 12, the apparatus further includes an acquiring module 1205 configured to acquire a processed result from the data processing module, where the processing module is obtained by processing the to-be-processed module and is uploaded to the data storage module, by the second application.

In some implementations, the acquiring module 1205 is specifically configured to: acquire a data storage structure of the data storage module, and acquire the processed result from the data storage module according to the data storage structure, where the data storage structure refers to a storage form used by the data storage module when storing data; and acquire a data storage structure of the data storage module, and acquire the processed result from the data storage module according to the data storage structure, by the first application, where the data storage structure refers to a storage form used by the data storage module when storing data.

Optionally, data that is stored in the data storage module includes multiple pieces of sub-data, each piece of sub-data has a corresponding identifier, and the data that is stored includes the to-be-processed data and the processed result.

In some implementations, the acquiring module 1205 is specifically configured to: send first request information to the data storage module, where the first request information includes one or more first fields, and a first field corresponds to a piece of sub-data; and receive first response information from the data storage module, where the first response information includes a piece of sub-data corresponding to each first field of the one or more first fields.

Optionally, when the processed result does not include a piece of sub-data corresponding to a first field, the first response information includes a preset parameter corresponding to the piece of sub-data.

The embodiments of the present disclosure further provide an application subscription apparatus correspondingly, and the application subscription apparatus may be applied to the above application control module. The application control module is configured to control a deployment of a first application and a deployment of a second application. There is an association relationship between the first application and the second application, and the first application is capable of controlling a running state of the second application by means of the application control module. FIG. 13 is a structural schematic diagram of an application subscription apparatus provided in the embodiments of the present disclosure. As shown in FIG. 13, the application subscription apparatus may include: a receiving module 1301, configured to receive subscription information for subscribing to application updating information; and a sending module 1302, configured to send first notification information when the first application and/or the second application is determined to be updated, where the first notification information is used to indicate presence of application updating.

Optionally, the first notification information includes updating information on an attribute of the first application and/or updating information on an attribute of the second application.

Optionally, the first notification information is further used to indicate presence of a new application.

In some implementations, the receiving module 1301 is further configured to first query information, where the first query information is used to query information of attribute(s) of the first application, the first query information includes one or more second fields, and a second field corresponds to an attribute in the information of the attribute(s) of the first application. The sending module 1320 is further configured to send a first query result, where the first query result includes attribute(s) corresponding to the one or more second fields.

Optionally, the first query information is further used to query whether a preset event occurs in the first application and/or attribute updating information of the first application; when the preset event occurs in the first application, the first query result further includes an identifier of the preset event; and when an attribute of the first application is changed, the first query result further includes a value of the attribute that is changed.

In some implementations, the receiving module 1301 is further configured to receive second query information, where the second query information is used to query attribute information of the second application, and the second query information includes an identifier of the second application. The sending module 1302 is further configured to send a second query result, where the second query result includes the attribute information of the second application, and the attribute information includes a running state of the second application.

As described above, the embodiments of the present disclosure may divide the respective execution entities involved in the application management method into functional modules according to the above method examples. Herein, the above integrated modules may be implemented in the form of hardware or may be implemented in the form of software functional modules. In addition, it should also be noted that the division of modules in the embodiments of the present disclosure is schematic and only a logical functional division. There may be other division manners in actual implementations. For example, respective functions may be divided into respective functional modules correspondingly, or two or more functions may be integrated into one processing module.

Regarding the application management apparatus in the above embodiments, the specific manners and the beneficial effects of respective modules thereof performing operations have been described in detail in the above method embodiments, and will not be repeated here.

The embodiments of the present disclosure further provide an electronic device, and the electronic device may be a hardware device corresponding to an application store, or a device on the development side, or the aforementioned user device. The electronic device includes a processor and a memory for storing instructions executable by the processor. The processor is configured to when executing the instructions, cause the electronic device to implement the methods as described in the aforementioned embodiments.

In exemplary embodiments, the embodiments of the present disclosure further provide a computer-readable storage medium on which computer program instructions are stored. The computer program instructions, when executed by an electronic device, cause the electronic device to implement the methods as described in the aforementioned embodiments.

Optionally, the aforementioned computer-readable storage medium may be a non-transitory computer-readable storage medium, for example, the non-transitory computer-readable storage medium may be a read only memory (ROM), a random access memory (RAM), a compact disc read-only memory (CD-ROM), a magnetic tape, a floppy disk, and an optical data storage device, etc.

In exemplary embodiments, the embodiments of the present disclosure further provide a computer program product including computer-readable codes, or a non-volatile computer-readable storage medium carrying computer-readable codes. When the computer-readable codes are executed in an electronic device, a processor in the electronic device implements the methods as described in the aforementioned embodiments.

Those skilled in the art, after considering the specification and practicing the invention disclosed here, will easily conceive of other implementations of the present disclosure. The present disclosure is intended to cover any variations, usage, or adaptive changes of the present disclosure, and these variations, usage, or adaptive changes follow the general principles of the present disclosure and include common knowledge or customary technical means in the art, which are not disclosed in the present disclosure. The specification and the embodiments are regarded as exemplary only, and a true scope and spirit of the present disclosure are indicated by the claims as follows.

It should be understood that the present disclosure is not limited to the precise structures described above and shown in the drawings, and various modifications and changes may be made therein without departing from its scope. The scope of the present disclosure is limited by the appended claims only.

## Claims

1. An application management method, **characterized in that** the method comprises:
establishing, by a first application, an association relationship with a second application; and
controlling, by the first application by means of an application control module, a running state of the second application, wherein the application control module is configured to control a deployment of the first application and a deployment of the second application.

2. The method according to claim 1, wherein the association relationship is a parent-child relationship, and the first application is a parent application of the second application.

3. The method according to claim 1 or 2, wherein controlling, by the first application by means of the application control module, the running state of the second application, comprises:
sending, by the first application, a first control instruction to the application control module, so that the application control module controls start or stop running of the second application according to the first control instruction.

4. The method according to any one of claims 1 to 3, wherein the method further comprises:
receiving, by the first application, first configuration information from the application control module, wherein the first configuration information is used to start the first application; and
sending, by the first application, second configuration information to the application control module, wherein the second configuration information is used to start the second application.

5. The method according to claim 4, wherein configuration information of the second application comprises to-be-processed data and a processed result.

6. The method according to any one of claims 1 to 5, wherein the method further comprises:
uploading, by the first application, to-be-processed data to a data storage module, so that the second application acquires the to-be-processed data from the data storage module.

7. The method according to claim 6, wherein the method further comprises:
acquiring, by the first application, a processed result from the data storage module, wherein the processed result is obtained by processing the to-be-processed data and is uploaded to the data storage module, by the second application.

8. The method according to claim 6 or 7, wherein acquiring, by the first application, the processed result from the data storage module, comprises:
acquiring a data storage structure of the data storage module, and acquiring the processed result from the data storage module according to the data storage structure, by the first application, wherein the data storage structure refers to a storage form used by the data storage module when storing data;
that the second application acquires the to-be-processed data from the data storage module, refers to that the second application acquires the to-be-processed data from the data storage module according to the data storage structure.

9. The method according to claim 8, wherein data that is stored in the data storage module comprises multiple pieces of sub-data, each piece of sub-data has a corresponding identifier, and the data that is stored comprises the to-be-processed data and the processed result.

10. The method according to claim 9, wherein acquiring, by the first application, the processed result from the data storage module, comprises:
sending, by the first application, first request information to the data storage module, wherein the first request information comprises one or more first fields, and a first field corresponds to a piece of sub-data; and
receiving, by the first application, first response information from the data storage module, wherein the first response information comprises a piece of sub-data corresponding to each first field of the one or more first fields.

11. The method according to claim 10, wherein when the processed result does not comprise a piece of sub-data corresponding to a first field, the first response information comprises a preset parameter corresponding to the piece of sub-data.

12. An application subscription method, **characterized in that** the method is applied to an application control module, the application control module is configured to control a deployment of a first application and a deployment of a second application, there is an association relationship between the first application and the second application, and the first application is capable of controlling a running state of the second application by means of the application control module; and the method comprises:
receiving subscription information, wherein the subscription information is used to subscribe to application updating information; and
sending first notification information when the first application and/or the second application is determined to be updated, wherein the first notification information is used to indicate presence of application updating.

13. The method according to claim 12, wherein the first notification information comprises updating information on an attribute of the first application and/or updating information on an attribute of the second application.

14. The method according to claim 12 or 13, wherein the first notification information is further used to indicate presence of a new application.

15. The method according to any one of claims 12 to 14, wherein the method further comprises:
receiving first query information, wherein the first query information is used to query information of attributes of the first application, the first query information comprises one or more second fields, and a second field corresponds to an attribute in the information of the attributes of the first application; and
sending a first query result, wherein the first query result comprises attributes corresponding to the one or more second fields.

16. The method according to claim 15, wherein the first query information is further used to query whether a preset event occurs in the first application and/or attribute updating information of the first application;
when the preset event occurs in the first application, the first query result further comprises an identifier of the preset event; and
when an attribute of the first application is changed, the first query result further comprises a value of the attribute that is changed.

17. The method according to any one of claims 12 to 14, wherein the method further comprises:
receiving second query information, wherein the second query information is used to query attribute information of the second application, and the second query information comprises an identifier of the second application; and
sending a second query result, wherein the second query result comprises the attribute information of the second application, and the attribute information comprises a running state of the second application.

18. An application management apparatus, **characterized in that** the apparatus is applied to a first application, and the apparatus comprises:
an establishing module, configured to establish an association relationship with a second application; and
a control module, configured to control a running state of the second application by means of an application control module, wherein the application control module is configured to control a deployment of the first application and a deployment of the second application.

19. The apparatus according to claim 18, wherein the association relationship is a parent-child relationship, and the first application is a parent application of the second application.

20. The apparatus according to claim 18 or 19, wherein the control module is specifically configured to:
send a first control instruction to the application control module, so that the application control module controls start or stop running of the second application according to the first control instruction.

21. The apparatus according to any one of claims 18 to 20, wherein the apparatus further comprises a receiving module and a sending module;
the receiving module is configured to receive first configuration information from the application control module, and the first configuration information is used to start the first application; and
the sending module is configured to send second configuration information to the application control module, and the second configuration information is used to start the second application.

22. The apparatus according to claim 21, wherein second configuration information is sent to the application control module, and the second configuration information is used to start the second application.

23. The apparatus according to any one of claims 18 to 22, wherein the sending module is further configured to upload to-be-processed data to a data storage module, so that the second application acquires the to-be-processed data from the data storage module.

24. The apparatus according to claim 23, wherein the apparatus further comprises an acquiring module, the acquiring module is configured to: acquire a processed result from the data storage module, wherein the processed result is obtained by processing the to-be-processed data and is uploaded to the data storage module, by the second application.

25. The apparatus according to claim 23 or 24, wherein the acquiring module is specifically configured to:
acquire a data storage structure of the data storage module, and acquire the processed result from the data storage module according to the data storage structure, wherein the data storage structure refers to a storage form used by the data storage module when storing data;
wherein acquiring the to-be-processed data from the data storage module, refers to that the second application acquires the to-be-processed data from the storage module according to the data storage structure.

26. The apparatus according to claim 25, wherein data that is stored in the data storage module comprises multiple pieces of sub-data, each piece of sub-data has a corresponding identifier, and the data that is stored comprises the to-be-processed data and the processed result.

27. The apparatus according to claim 26, wherein the acquiring module is specifically configured to:
send first request information to the data storage module, wherein the first request information comprises one or more first fields, and a first field corresponds to a piece of sub-data; and
receive first response information from the data storage module, wherein the first response information comprises a piece of sub-data corresponding to each first field of the one or more first fields.

28. The apparatus according to claim 27, wherein when the processed result does not comprise a piece of sub-data corresponding to a first field, the first response information comprises a preset parameter corresponding to the piece of sub-data.

29. An application subscription apparatus, applied to an application control module, **characterized in that** the application control module is configured to control a deployment of a first application and a deployment of a second application, there is an association relationship between the first application and the second application, and the first application is capable of controlling a running state of the second application by means of the application control module; and the apparatus comprises:
a receiving module, configured to receive subscription information, wherein the subscription information is used to subscribe to application updating information; and
a sending module, configured to send first notification information when the first application and/or the second application is determined to be updated, wherein the first communication information is used to indicate presence of application updating.

30. The apparatus according to claim 29, wherein the first notification information comprises updating information on an attribute of the first application and/or updating information on an attribute of the second application.

31. The apparatus according to claim 29 or 30, wherein the first notification information is further used to indicate presence of a new application.

32. The apparatus according to any one of claims 29 to 31, wherein
the receiving module is further configured to first query information, wherein the first query information is used to query information of attributes of the first application, the first query information comprises one or more second fields, and a second field corresponds to an attribute in the information of the attributes of the first application; and
the sending module is further configured to send a first query result, wherein the first query result comprises attributes corresponding to the one or more second fields.

33. The apparatus according to claim 32, wherein the first query information is further used to query whether a preset event occurs in the first application and/or attribute updating information of the first application;
when the preset event occurs in the first application, the first query result further comprises an identifier of the preset event; and
when an attribute of the first application is changed, the first query result further comprises a value of the attribute that is changed.

34. The apparatus according to any one of claims 29 to 31, wherein
the receiving module is further configured to receive second query information, wherein the second query information is used to query attribute information of the second application, and the second query information comprises an identifier of the second application; and
the sending module is further configured to a second query result, wherein the second query result comprises the attribute information of the second application, and the attribute information comprises a running state of the second application.

35. An electronic device, **characterized by** comprising: a processor; a memory; and a computer program; wherein the computer program is stored on the memory, and the computer program, when executed by the processor, causes the electronic device to implement the method according to any one of claims 1 to 11, or the method according to any one of claims 12 to 17.

36. A computer-readable storage medium, **characterized in that** the computer-readable storage medium comprises a computer program, **characterized in that** the computer program, when executed on an electronic device, causes the electronic device to implement the method according to any one of claims 1 to 11, or the method according to any one of claims 12 to 17.

37. A computer program product, **characterized by** comprising computer-readable codes or a non-volatile computer-readable storage medium carrying computer-readable codes, wherein when the computer-readable codes are executed in an electronic device, a processor in the electronic device implements the method according to any one of claims 1 to 11, or the method according to any one of claims 12 to 17.
